# EUROPEAN PATENT APPLICATION

(11) **EP 4 844 592 A1**
(43) Date of publication of application: **25.11.2026**
(21) Application number: 26166100.3
(22) Date of filing: 19.03.2026
(51) Int. Cl.: G06F 11/3668, G06N 20/00

(54) **METHOD AND SYSTEM FOR STRUCTURAL ONTOLOGY BASED TEST CASE GENERATION**

(30) Priority: 21.05.2025 IN 202521049096
(71) Applicant: Tata Consultancy Services Limited, Maharashtra (IN)
(72) Inventor: ARORA, Nishtha, 411057 Pune, Maharashtra (IN); AGRAWAL, Supriya, 411028 Pune, Maharashtra (IN); AGRAWAL, Pankaj Shamlal, 411057 Pune, Maharashtra (IN); SHAH, Harsh Ajaykumar, 411057 Pune, Maharashtra (IN); MANDPE, Vishwas, 411057 Pune, Maharashtra (IN); OJHA, Devashish, 411057 Pune, Maharashtra (IN); SHETE, Pranav Gaurishankar, 411057 Pune, Maharashtra (IN); JOSHI, Vaibhavi Vivek, 411057 Pune, Maharashtra (IN); KARMARKAR, Hrishikesh Sawalaram, 400021 Mumbai, Maharashtra (IN)
(74) Representative: Goddar, Heinz J.

(57) **Abstract**

Existing test case generation approaches require manual intervention, at least partially, which makes the approaches error-prone. Further, the existing approaches do not fully leverage advanced AI capabilities as Generative Artificial Intelligence (GenAI) models such as LLMs have inherent challenges, for example, they may hallucinate or miss a few things due to large document size, especially when processing unstructured documents. Embodiments disclosed herein provide a method and system for structural ontology based test case generation in which a Structure-Semantics History Ontologies (SSHO) is generated, which captures information on relationships between testcases generated, and corresponding documents, section names, and so on. This information from the SSHO is used to identify valid chunks of information from structured and unstructured documents, which are then used for generating test cases.

## Description

### CROSS-REFERENCE TO RELATED APPLICATIONS AND PRIORITY

The present application claims priority from Indian application no. 202521049096, filed on May 21, 2025.

### TECHNICAL FIELD

The disclosure herein generally relates to test case generation, and, more particularly, to a method and system for structural ontology based test case generation.

### BACKGROUND

Testing is an integral part of application development and Software Development Life Cycle (SDLC). In testing phase, performance of an application that has been developed is tested under various test scenarios. The test scenarios represent real-world scenarios in which the application is intended to perform, and when subjected to the test scenarios, if the application is misbehaving or is underperforming, it is an indication that the application may fail to perform as intended and provides an opportunity for a developer to make necessary changes to correct the issues.

Test scenarios are simulated by using test cases. The test cases are traditionally written with manual intervention. However, the requirement to have manual intervention makes the approach time-consuming and error-prone. This automation reduces costs, improves scalability and test coverage, speeds up time-to-market, and allows testers to focus on more critical quality assurance tasks. Further, the existing approaches through Artificial Intelligence (AI) capabilities may aid to an extent to overcome such challenges, existing approaches do not fully leverage advanced AI capabilities as Generative Artificial Intelligence (GenAI) models, such as LLMs, have inherent challenges, for example, they may hallucinate or miss a few things due to large document size, especially when processing unstructured documents.

### SUMMARY

Embodiments of the present disclosure present technological improvements as solutions to one or more of the above-mentioned technical problems recognized by the inventors in conventional systems. For example, in one embodiment, a processor implemented method is provided. The method includes: receiving, via one or more hardware processors, an Application Programming Interface (API) for testing, a Structure-Semantics History Ontologies (SSHO)_Rel data associated with the API, and a Context Summary (CS); querying, via the one or more hardware processors, a vector DataBase (vector DB) to retrieve a plurality of chunks of information related to the API, wherein the plurality of chunks of information comprise data from one or more of a plurality of structured documents and unstructured documents; determining, via the one or more hardware processors, validity of each of the plurality of chunks of information retrieved from the vector DB, with reference to the API, comprising: performing a first level of validation comprising validating a relevancy of the retrieved plurality of chunks of information by a first Generative Artificial Intelligence (GenAI) model using a document name and section attached to each of the plurality of chunks, and a relationship data extracted from the SSHO_Rel data and the CS, wherein a first relevance score representing extent of relevance of the retrieved plurality of chunks is generated while performing the first level of validation; performing a second level of validation comprising validating the relevancy of the retrieved plurality of chunks of information using a second GenAI model, using the document name and section attached to each of the plurality of chunks of information and the relationship data extracted from the SSHO_Rel data and the CS, wherein a second relevance score representing extent of relevance of the retrieved plurality of chunks is generated while performing the second level of validation; performing a third level of validation, comprising validating the relevancy of the retrieved plurality of chunks of information based on the SSHO_Rel data and the CS, wherein a third relevance score representing extent of relevance of the retrieved plurality of chunks is generated while performing the third level of validation; and generating a combined probability score, based on the first relevance score, the second relevance score, and the third second relevance score, wherein the combined probability score represents the validity of each of the plurality of chunks of information for the API; and generating, via the one or more hardware processors, a plurality of test cases comprising a plurality of positive testcases and negative testcases by processing a) one or more of the plurality of chunks identified as valid, based on having the combined probability score exceeding a threshold, and b) one or more business rules, wherein while generating the plurality of test cases, a plurality of fields of each of the plurality of test cases are filled using data from the one or more of the plurality of chunks having the probability score exceeding the threshold.

In an aspect of the method, the plurality of test cases are validated by an evaluation, and wherein if number of testcases failed is exceeding a threshold, a plurality of chunks of information used for execution of the plurality of test cases are validated and the SSHO is updated.

In another aspect of the method, updating the SSHO comprises replacing one or more entries in the SSHO that are identified to be related to one or more testcases that failed the validation, with one or more new entries.

In another aspect of the method, the CS is generated using a plurality of structured and unstructured documents, one or more test case formats, and contents of the SSHO.

In another aspect of the method, the SSHO is created using a Cascading Influence Matrix (CIM) based approach, comprising: capturing relationship between a plurality of historical testcases, associated results, associated documents, and associated sections in the documents, in the CIM; and extracting a summary of the CIM by processing the CIM using a third GenAI model, wherein the extracted summary represents the SSHO.

In another aspect of the method, the SSHO_Rel data associated with the API represents historical context with respect to association of a plurality of test cases with name and section of corresponding documents from among a plurality of documents.

In another aspect, a system is provided. The system includes: one or more hardware processors, a communication interface, and a memory storing a plurality of instructions. The plurality of instructions cause the one or more hardware processors to: receive an Application Programming Interface (API) for testing, a Structure-Semantics History Ontologies (SSHO)_Rel data associated with the API, and a Context Summary (CS); query a vector DataBase (vector DB) to retrieve a plurality of chunks of information related to the API, wherein the plurality of chunks of information comprise data from one or more of a plurality of structured documents and unstructured documents; determine validity of each of the plurality of chunks of information retrieved from the vector DB, with reference to the API, by: performing a first level of validation comprising validating a relevancy of the retrieved plurality of chunks of information by a first Generative Artificial Intelligence (GenAI) model using a document name and section attached to each of the plurality of chunks, and a relationship data extracted from the SSHO_Rel data and the CS, wherein a first relevance score representing extent of relevance of the retrieved plurality of chunks is generated while performing the first level of validation; performing a second level of validation comprising validating the relevancy of the retrieved plurality of chunks of information using a second GenAI model, using the document name and section attached to each of the plurality of chunks of information and the relationship data extracted from the SSHO_Rel data and the CS, wherein a second relevance score representing extent of relevance of the retrieved plurality of chunks is generated while performing the second level of validation; performing a third level of validation, comprising validating the relevancy of the retrieved plurality of chunks of information based on the SSHO_Rel data and the CS, wherein a third relevance score representing extent of relevance of the retrieved plurality of chunks is generated while performing the third level of validation; and generating a combined probability score, based on the first relevance score, the second relevance score, and the third second relevance score, wherein the combined probability score represents the validity of each of the plurality of chunks of information for the API; and generate a plurality of test cases comprising a plurality of positive testcases and negative testcases by processing a) one or more of the plurality of chunks identified as valid, based on having the combined probability score exceeding a threshold, and b) one or more business rules, wherein while generating the plurality of test cases, a plurality of fields of each of the plurality of test cases are filled using data from the one or more of the plurality of chunks having the probability score exceeding the threshold.

In an aspect of the system, the one or more hardware processors are configured to validate the plurality of test cases by an evaluation, and wherein if number of testcases failed is exceeding a threshold, a plurality of chunks of information used for execution of the plurality of test cases are validated and the SSHO is updated.

In another aspect of the system, the one or more hardware processors are configured to update the SSHO by replacing one or more entries in the SSHO that are identified to be related to one or more testcases that failed the validation, with one or more new entries.

In another aspect of the system, the one or more hardware processors are configured to generate the CS using a plurality of structured and unstructured documents, one or more test case formats, and contents of the SSHO.

In another aspect of the system, the one or more hardware processors are configured to create the SSHO using a Cascading Influence Matrix (CIM) based approach, by: capturing relationship between a plurality of historical testcases, associated results, associated documents, and associated sections in the documents, in the CIM; and extracting a summary of the CIM by processing the CIM using a third GenAI model, wherein the extracted summary represents the SSHO.

In another aspect of the system, the SSHO_Rel data associated with the API represents historical context with respect to association of a plurality of test cases with name and section of corresponding documents from among a plurality of documents.

In yet another aspect, there are provided one or more non-transitory machine-readable information storage mediums comprising one or more instructions which when executed by one or more hardware processors cause: receiving an Application Programming Interface (API) for testing, a Structure-Semantics History Ontologies (SSHO)_Rel data associated with the API, and a Context Summary (CS); querying a vector DataBase (vector DB) to retrieve a plurality of chunks of information related to the API, wherein the plurality of chunks of information comprise data from one or more of a plurality of structured documents and unstructured documents; determining validity of each of the plurality of chunks of information retrieved from the vector DB, with reference to the API, by: performing a first level of validation comprising validating a relevancy of the retrieved plurality of chunks of information by a first Generative Artificial Intelligence (GenAI) model using a document name and section attached to each of the plurality of chunks, and a relationship data extracted from the SSHO_Rel data and the CS, wherein a first relevance score representing extent of relevance of the retrieved plurality of chunks is generated while performing the first level of validation; performing a second level of validation comprising validating the relevancy of the retrieved plurality of chunks of information using a second GenAI model, using the document name and section attached to each of the plurality of chunks of information and the relationship data extracted from the SSHO_Rel data and the CS, wherein a second relevance score representing extent of relevance of the retrieved plurality of chunks is generated while performing the second level of validation; performing a third level of validation, comprising validating the relevancy of the retrieved plurality of chunks of information based on the SSHO_Rel data and the CS, wherein a third relevance score representing extent of relevance of the retrieved plurality of chunks is generated while performing the third level of validation; and generating a combined probability score, based on the first relevance score, the second relevance score, and the third second relevance score, wherein the combined probability score represents the validity of each of the plurality of chunks of information for the API; and generating a plurality of test cases comprising a plurality of positive testcases and negative testcases by processing a) one or more of the plurality of chunks identified as valid, based on having the combined probability score exceeding a threshold, and b) one or more business rules, wherein while generating the plurality of test cases, a plurality of fields of each of the plurality of test cases are filled using data from the one or more of the plurality of chunks having the probability score exceeding the threshold.

In an aspect of the non-transitory computer readable medium, the one or more hardware processors are configured to validate the plurality of test cases by an evaluation, and wherein if number of testcases failed is exceeding a threshold, a plurality of chunks of information used for execution of the plurality of test cases are validated and the SSHO is updated.

In another aspect of the non-transitory computer readable medium, the one or more hardware processors are configured to update the SSHO by replacing one or more entries in the SSHO that are identified to be related to one or more testcases that failed the validation, with one or more new entries.

In another aspect of the non-transitory computer readable medium, the one or more hardware processors are configured to generate the CS using a plurality of structured and unstructured documents, one or more test case formats, and contents of the SSHO.

In another aspect of the non-transitory computer readable medium, the one or more hardware processors are configured to create the SSHO using a Cascading Influence Matrix (CIM) based approach, by: capturing relationship between a plurality of historical testcases, associated results, associated documents, and associated sections in the documents, in the CIM; and extracting a summary of the CIM by processing the CIM using a third GenAI model, wherein the extracted summary represents the SSHO.

In another aspect of the non-transitory computer readable medium, the SSHO_Rel data associated with the API represents historical context with respect to association of a plurality of test cases with name and section of corresponding documents from among a plurality of documents.

It is to be understood that both the foregoing general description and the following detailed description are exemplary and explanatory only and are not restrictive of the invention, as claimed.

### BRIEF DESCRIPTION OF THE DRAWINGS

The accompanying drawings, which are incorporated in and constitute a part of this disclosure, illustrate exemplary embodiments and, together with the description, serve to explain the disclosed principles:
FIG. 1 illustrates an exemplary system for Structure-Semantics History Ontologies (SSHO) based test case generation, according to some embodiments of the present disclosure.
FIG. 2 is a flow diagram depicting steps involved in the process of the SSHO based test case generation, by the system of FIG. 1, according to some embodiments of the present disclosure.
FIG. 3 is a flow diagram depicting steps involved in the process of the SSHO based test case generation, by the system of FIG. 1, according to some embodiments of the present disclosure.
FIG. 4 is a flow diagram depicting steps involved in the process of the SSHO based test case generation, by the system of FIG. 1, according to some embodiments of the present disclosure.

### DETAILED DESCRIPTION OF EMBODIMENTS

Exemplary embodiments are described with reference to the accompanying drawings. In the figures, the left-most digit(s) of a reference number identifies the figure in which the reference number first appears. Wherever convenient, the same reference numbers are used throughout the drawings to refer to the same or like parts. While examples and features of disclosed principles are described herein, modifications, adaptations, and other implementations are possible without departing from the scope of the disclosed embodiments.

Test scenarios are simulated by using test cases. The test cases are traditionally written with manual intervention. However, the requirement to have manual intervention makes the approach time-consuming and error-prone. This automation reduces costs, improves scalability and test coverage, speeds up time-to-market, and allows testers to focus on more critical quality assurance tasks. Further, the existing approaches do not fully leverage advanced AI capabilities of Generative AI models, such as LLMs, as they have inherent challenges, for example, they may hallucinate or miss a few things due to large document size, especially when processing unstructured documents.

To address these challenges, embodiments disclosed herein provide a method and system for structural ontology based test case generation. In this method, an Application Programming Interface (API) for testing, a Structure-Semantics History Ontologies (SSHO)_Rel data associated with the API, and a Context Summary (CS) are received. The SSHO_Rel data represents historical context with respect to association of a plurality of test cases with name and section of corresponding documents from among a plurality of documents. The CS is generated using a plurality of structured and unstructured documents, one or more test case formats, and contents of the SSHO. Further, a vector DataBase (vector DB) is queried to retrieve a plurality of chunks of information related to the API, wherein the plurality of chunks of information comprise data from one or more of a plurality of structured documents and unstructured documents. Further, validity of each of the plurality of chunks of information retrieved from the vector DB is determined with reference to the API. Determining the validity includes the following steps. A first level of validation is performed, which involves validating a relevancy of the retrieved plurality of chunks of information by a first Generative Artificial Intelligence (GenAI) model using a document name and section attached to each of the plurality of chunks, and a relationship data extracted from the SSHO_Rel data and the CS, wherein a first relevance score representing extent of relevance of the retrieved plurality of chunks is generated while performing the first level of validation. Then a second level of validation is performed which involves validating the relevancy of the retrieved plurality of chunks of information using a second GenAI model, using the document name and section attached to each of the plurality of chunks of information and the relationship data extracted from the SSHO_Rel data and the CS, wherein a second relevance score representing extent of relevance of the retrieved plurality of chunks is generated while performing the second level of validation. Then a third level of validation is performed which involves validating the relevancy of the retrieved plurality of chunks of information based on the SSHO_Rel data and the CS, wherein a third relevance score representing extent of relevance of the retrieved plurality of chunks is generated while performing the third level of validation. Then a combined probability score is generated based on the first relevance score, the second relevance score, and the third second relevance score, wherein the combined probability score represents an average extent of relevancy of each of the plurality of chunks of information for the API. After determining the validity, a plurality of test cases comprising a plurality of positive testcases and negative testcases are generated by processing a) one or more of the plurality of chunks having the combined probability score exceeding a threshold, and b) one or more business rules, wherein while generating the plurality of test cases, a plurality of fields of each of the plurality of test cases are filled using data from the one or more of the plurality of chunks having the probability score exceeding the threshold. This approach overcomes the stated challenges of the prior art references by using the Structured Semantics History Ontologies (SSHO) based test case generation technique. The SSHO contains information about relationships between input documents and output test cases learned and refined over time i.e., a historical context. The system derives from the SSHO, meaning to structural elements that are frequently seen in test case generation, and in turn uses this information for test case generation by identifying the dependencies/ relationships and use them to improve the test construction from chunks. For each test cases and its columns, this SSHO helps in identifying most relevant chunks for generate more accurate result and refines it over time.

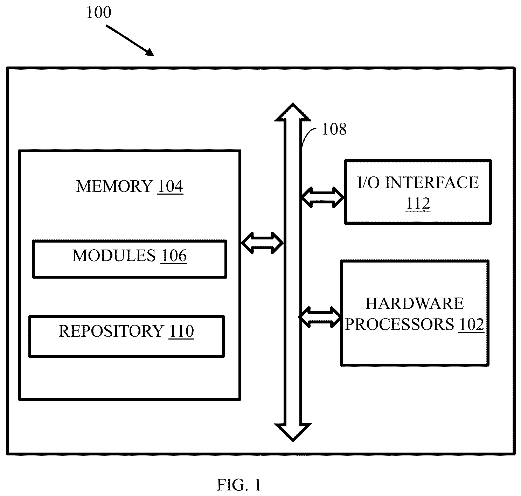

Referring now to the drawings, and more particularly to FIG. 1 through FIG. 4, where similar reference characters denote corresponding features consistently throughout the figures, there are shown preferred embodiments and these embodiments are described in the context of the following exemplary system and/or method.

FIG. 1 illustrates an exemplary system for Structure-Semantics History Ontologies (SSHO) based test case generation, according to some embodiments of the present disclosure.

The system 100 includes or is otherwise in communication with hardware processors 102, at least one memory such as a memory 104, an I/O interface 112. The hardware processors 102, memory 104, and the Input /Output (I/O) interface 112 may be coupled by a system bus such as a system bus 108 or a similar mechanism. In an embodiment, the hardware processors 102 can be one or more hardware processors.

The I/O interface 112 may include a variety of software and hardware interfaces, for example, a web interface, a graphical user interface, and the like. The I/O interface 112 may include a variety of software and hardware interfaces, for example, interfaces for peripheral device(s), such as a keyboard, a mouse, an external memory, a printer and the like. Further, the I/O interface 112 may enable the system 100 to communicate with other devices, such as web servers, and external databases.

The I/O interface 112 can facilitate multiple communications within a wide variety of networks and protocol types, including wired networks, for example, local area network (LAN), cable, etc., and wireless networks, such as Wireless LAN (WLAN), cellular, or satellite. For the purpose, the I/O interface 112 may include one or more ports for connecting several computing systems with one another or to another server computer. The I/O interface 112 may include one or more ports for connecting several devices to one another or to another server.

The one or more hardware processors 102 may be implemented as one or more microprocessors, microcomputers, microcontrollers, digital signal processors, central processing units, node machines, logic circuitries, and/or any devices that manipulate signals based on operational instructions. Among other capabilities, the one or more hardware processors 102 is configured to fetch and execute computer-readable instructions stored in the memory 104.

The memory 104 may include any computer-readable medium known in the art including, for example, volatile memory, such as static random-access memory (SRAM) and dynamic random-access memory (DRAM), and/or non-volatile memory, such as read only memory (ROM), erasable programmable ROM, flash memories, hard disks, optical disks, and magnetic tapes. In an embodiment, the memory 104 includes a plurality of modules 106.

The plurality of modules 106 include programs or coded instructions that supplement applications or functions performed by the system 100 for executing different steps involved in the process of SSHO based test case generation, being performed by the system of FIG. 1. The plurality of modules 106, amongst other things, can include routines, programs, objects, components, and data structures, which performs particular tasks or implement particular abstract data types. The plurality of modules 106 may also be used as, signal processor(s), node machine(s), logic circuitries, and/or any other device or component that manipulates signals based on operational instructions. Further, the plurality of modules 106 can be used by hardware, by computer-readable instructions executed by the one or more hardware processors 102, or by a combination thereof. The plurality of modules 106 can include various sub-modules (not shown). The plurality of modules 106 may include computer-readable instructions that supplement applications or functions performed by the system 100 for the SSHO based test case generation.

The data repository (or repository) 110 may include a plurality of abstracted piece of code for refinement and data that is processed, received, or generated as a result of the execution of the plurality of modules in the module(s) 106.

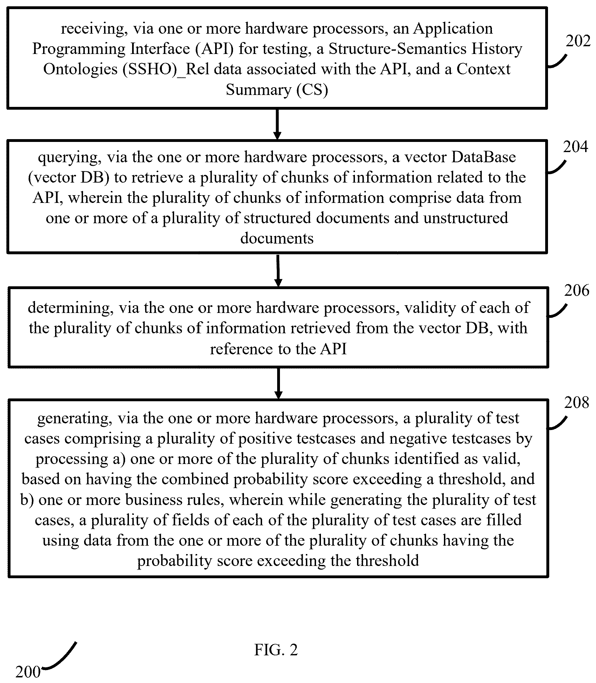

Although the data repository 110 is shown internal to the system 100, it will be noted that, in alternate embodiments, the data repository 110 can also be implemented external to the system 100, where the data repository 110 may be stored within a database (repository 110) communicatively coupled to the system 100. The data contained within such external database may be periodically updated. For example, new data may be added into the database (not shown in FIG. 1) and/or existing data may be modified and/or non-useful data may be deleted from the database. In one example, the data may be stored in an external system, such as a Lightweight Directory Access Protocol (LDAP) directory and a Relational Database Management System (RDBMS). Functions of the components of the system 100 are now explained with reference to the flow diagrams in FIG. 2 through FIG. 4.

FIG. 2 is a flow diagram depicting steps involved in the process of the SSHO based test case generation, by the system of FIG. 1, according to some embodiments of the present disclosure.

In an embodiment, the system 100 comprises one or more data storage devices or the memory 104 operatively coupled to the processor(s) 102 and is configured to store instructions for execution of steps of the method 200 by the processor(s) or one or more hardware processors 102. The steps of the method 200 of the present disclosure will now be explained with reference to the components or blocks of the system 100 as depicted in FIG. 1 and the steps of flow diagrams as depicted in FIG. 2 through FIG. 4. Although process steps, method steps, techniques or the like may be described in a sequential order, such processes, methods, and techniques may be configured to work in alternate orders. In other words, any sequence or order of steps that may be described does not necessarily indicate a requirement that the steps to be performed in that order. The steps of processes described herein may be performed in any order practical. Further, some steps may be performed simultaneously.

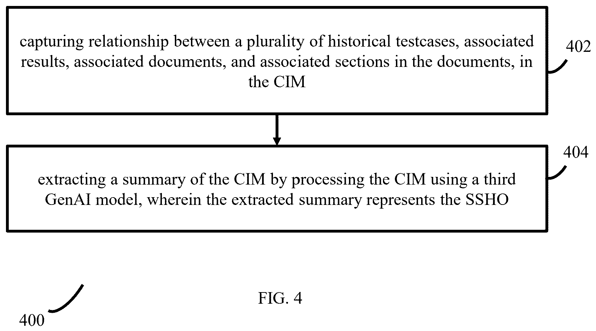

The system 100 uses the Structure-Semantics History Ontologies (SSHO) based approach for test case generation. The SSHO contains information about relationships between various input documents and output test cases learned and refined over time i.e., it has a historical context. A function of the SSHO is to give meaning to structural elements that are frequently seen in test case generation. Another function is to identify the dependencies/ relationships and use them to improve the test construction from chunks of information. SSHO is a complex semantic data structure and is constructed using the method 400 in FIG. 4. As depicted in FIG. 4, at step 402, the system 100 captures relationship between a plurality of historical testcases, associated results, associated documents, and associated sections in the documents, in a Cascading Influence Matrix (CIM). The CIM is a sparse matrix that captures the influence probability of an input field affecting an output structure.
A CIM [N × N] matrix is defined as:
Rows (A): Represent input fields (for e.g., "Username", "Account Type").
Columns (O): Represent output structures (for e.g., "Error Message", "Approval Status").
Values (CIM[A, O]): Store the influence probability and propagation strength between an input field and an output structure. The influence probability and propagation strength are derived from execution result of positive and negative test cases. The test cases passing on certain input fields and output structures increase its influence probability / propagation strength and it propagate/ update the SSHO accordingly.
Similar penalty decreases the value in case of failed test cases.

### Example representation:

**Table. 1**

| Input Field | Output 1: Error Code | Output 2: Response Time | Output 3: Approval Status |
|---|---|---|---|
| Field A | 0.8 | 0.4 | 0.6 |
| Field B | 0.2 | 0.9 | 0.3 |
| Field C | 0.1 | 0.2 | 0.7 |

Higher values indicate a stronger influence between an input structure and output structure. Once the CIM matrix is constructed, further, at step 404 of the method 400, the system 100 extracts the SSHO details from the CIM in the form of a CIM summary that highlights a) Key input fields with high-impact changes, which are input fields of test case that differentiates a test case, b) Output structures of test cases that are likely to be affected, and c) Propagation strength to determine test case priority based on execution result. The CIM summary forms the SSHO.

To extract the CIM summary, the system 100 initially identifies and extracts High-Impact Output Structures as:
Oi, where CIM[A_mod, Oi] > T are prioritized based on impact strength. Here, Modified Input Field (A_mod) refers to a field being changed in a test cycle and T is the minimum threshold for filtering weak dependencies. Further, a Summary Representation is generated from the High-Impact Output Structures by formatting the extracted dependencies into a structured summary.

For example, consider structure of CIM for Loan Application Test Cases as given below:
For a loan application system, the CIM[N × N] matrix is constructed, where:
- Rows (A): Represent input fields (e.g., "Salary", "Credit Score", "Loan Amount").
- Columns (O): Represent output structures (e.g., "Loan Approval", "Interest Rate").
- Values (CIM[A, O]): Store the influence probability and propagation strength between an input field and an output structure.

### Example: CIM Representation for Loan Application

**Table. 2**

| Input Field | Loan Approval (O1) | Interest Rate (O2) | Additional Verification (O3) |
|---|---|---|---|
| Salary | 0.85 | 0.70 | 0.10 |
| Credit Score | 0.65 | 0.90 | 0.05 |
| Loan Amount | 0.50 | 0.75 | 0.20 |
| Employment Type (SelfEmployed) | 0.30 | 0.40 | 0.80 |

Higher values indicate a stronger influence between an input structure and an output structure.
- Salary → Loan Approval (0.85): Strong influence, higher salaries increase approval probability.
- Credit Score → Interest Rate (0.90): Major factor, lower scores increase interest rates.
- Employment Type (Self-Employed) → Additional Verification (0.80): Self-employed users require additional verification.

The extracted CIM summary, which is the SSHO, can be stored in any format, for example, in a tabular format as an excel file with Master Table, Header Table and Relation table along with an associated ontology that captures relations between structural elements found in input and output data, i.e., in this example, artifacts in a test case generation pipeline. The master table then contains names of all input and output documents (test cases) and provides an associated ontology to define structure and semantics of documents. The header table contains each of the mentioned input-output documents (in MasterTable) as column headers and their respective section names along with ontologies at a finer granularity. The relation table contains a mapping and/or semantics of the input documents section to the output testcase structure i.e., which section in the input documents contributed to what column/section of the output test cases along with ontologies at an even finer granularity. In an embodiment, the SSHO creation is a one-time process. However, the SSHO may be updated based on data related to the test case generation being executed time to time. Steps in the SSHO based test case generation are depicted in method 200, and are explained below.

At step 202 of the method 200, the system 100 receives, via the one or more hardware processors 102, an Application Programming Interface (API) for testing, a Structure-Semantics History Ontologies (SSHO)_Rel data associated with the API, and a Context Summary (CS). The CS is generated using a plurality of structured and unstructured documents, one or more test case formats, and contents of the SSHO. Any data processing and summarization technique may be used for generating the CS. Examples of the data processing and summarization technique are frequency based methods, latent semantic analysis, and clustering based methods. This CS may be in natural text or fixed format. It helps the chunk selection to be more relevant. The SSHO_Rel data indicates/represents a portion/part of the SSHO, that is relevant to the API being tested, and represents historical context with respect to association of a plurality of test cases with name and section of corresponding documents from among a plurality of documents. As the SSHO is for full application, and may also contain extra information related to past APIs, to do a more targeted test case generation, the SSHO_Rel is derived from SSHO, and fed to the system 100 at the step 202.

Further, at step 204 of the method 200, the system 100 queries, via the one or more hardware processors 102, a vector DataBase (vector DB) to retrieve a plurality of chunks of information related to the API. The plurality of chunks of information include data with respect to the API, that is extracted from one or more of a plurality of structured documents and unstructured documents, using appropriate data extraction techniques like embedding based technique. The vector DB and associated data are stored in a database associated with the system, internally or externally. For example, the vector DB is stored in the memory 104. The system 100 fetches the plurality of chunks of information from the vector DB based on some pre-defined queries like API name, method, field names, and so on. Each chunk along with document name and section attached to it also contains some distance from the query. All documents are divided into the plurality of chunks. A vector embedding is created for each chunk of the plurality of chunks. The chunks and their vector embeddings are stored in a vector database. The vector DB stores and manages vector data. Data points/chunks are stored as arrays of numbers called "vectors," which are clustered based on similarity. The vector embeddings are numerical representations of data points/chunks that convert various types of data into arrays of numbers. This conversion to vectors is done by any existing embedding models like Word2Vec or Bidirectional Encoder Representations from Transformers (BERT). Embedding models are trained to convert data points into vectors. Vector representations enable similarity search. For example, a vector search for "smartphone" might also return results for "cellphone" and "mobile devices." Words with similar meanings or contexts are expected to have similar vector representations. The distance between vectors of 2 words/chinks with similar meaning will be very less. Similarly, Distance between a user query text and its closely related chunk is very less and hence chunks with least distance from query are selected.

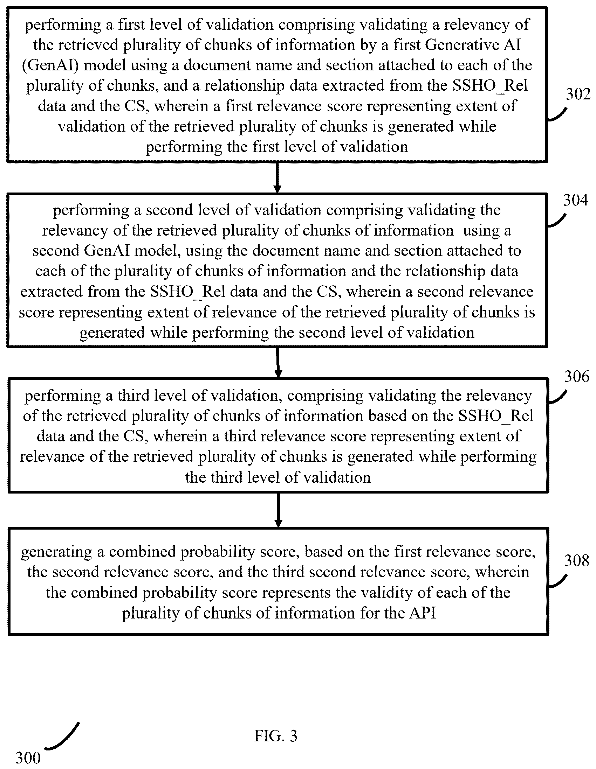

Further, at step 206 of the method 200, the system 100 determines, via the one or more hardware processors 102, validity of each of the plurality of chunks of information retrieved from the vector DB, with reference to the API. The system 100 determines the validity of each of the plurality of chunks of information, by executing a multi-level validation approach as represented by steps 302 through 308 of method 300 depicted in FIG. 3, which is elaborated herein.

At step 302 of the method 300, the system 100 performs a first level of validation. In this step, the system 100 validates a relevancy of the retrieved plurality of chunks of information by using a first Generative Artificial Intelligence (GenAI) model, by feeding a) a document name and section attached to each of the plurality of chunks, and b) a relationship data extracted from the SSHO_Rel data and the CS, as input to the Generative Artificial Intelligence (GenAI) model. The first GenAI model may be a Large Language Model (LLM) or any other suitable GenAI model. The first GenAI model is trained using training data that includes, but not limited to, a plurality of structured and unstructured documents, related document names, related sections, and related test cases. The first relevance score represents extent of relevance of the retrieved plurality of chunks, for the API. Further, at step 304 of the method 300, the system 100 performs a second level of validation which involves validating the relevancy of the retrieved plurality of chunks of information using a second GenAI model, using the document name and section attached to each of the plurality of chunks of information and the relationship data extracted from the SSHO_Rel data and the CS. The second GenAI model may be a Large Language Model (LLM) or any other suitable GenAI model. The second GenAI model may be a different GenAI model or same GenAI model as the first GenAI model, but fine-tuned for domain of the concerned API. A second relevance score generated during the second level of validation represents extent of relevance of the retrieved plurality of chunks, for the API. Further, at step 306 of the method 300, the system 100 performs a third level of validation, which includes validating the relevancy of the retrieved plurality of chunks of information based on the SSHO_Rel data and the CS. At this step, the system 100 may just compare the plurality of chunks, in terms of the relationships and document and section names, with the data in the SSHO_Rel data and the CS, and accordingly determines the extent of relevance. Based on the determined extent of relevance, a third relevance score is generated. Further, at step 308 of the method 300, the system 100 generates a combined probability score, based on the first relevance score, the second relevance score, and the third second relevance score. The combined probability score represents the validity of each of the plurality of chunks of information for the API. The system 100 may use any technique, such as but not limited to, weighted average, logistic combination, harmonic mean, and Noisy-OR or Bayesian update, to calculate the combined probability score.

Referring back to the method 200, at step 208, the system 100 generates, via the one or more hardware processors 102, a plurality of test cases comprising a plurality of positive testcases and negative testcases by processing a) one or more of the plurality of chunks identified as valid, based on having the combined probability score exceeding a threshold, and b) one or more business rules. While generating the plurality of test cases, a plurality of fields of each of the plurality of test cases are filled using data from the one or more of the plurality of chunks having the probability score exceeding the threshold. For a test case to be generated, the system 100 has a collection of high probability chunks, i.e., the chunks identified/determined based on the combined probability score. These chunks are given to a third GenAI model for extracting business rules. The third GenAI model used at this stage may be one of the first GenAI model or the second GenAI model, that is retrained on appropriate training data, or may be a different GenAI model other than the first GenAI model and the second GenAI model, which is pretrained on the appropriate data. For example, the third GenAI model is a LLM or any other suitable GenAI model. These business rules are processed by the third GenAI model to create description of one or more test cases. For example, a business rule may state that some id field should be between 1 and 100. Test case descriptions for this can be "positive case: field id = 100", "negative case: field id is having value >100", etc. Now, each test case description is selected for creating a test case. A test case has many columns or sections such as test case description, precondition, test data, output status description, etc. Relevant chunks are selected for each column by using previously mentioned probability based method and the test case description selected. Then, appropriate content is generated for each column using the third GenAI model. Combining these columns, a final test case is generated.

The plurality of test cases, once generated, are validated by an evaluation mechanism. In this approach, the test cases are executed, and it is determined whether result of execution of the test cases is intended result or not. If the result of execution of a test case is an intended one, then the test case is considered as successful one, and if the result of execution is not the intended one, then the test case is considered as a failure. From among a plurality of test cases generated, if number of testcases failed is exceeding a threshold, it is an indication that the SSHO data is not upto the mark, and in this case a plurality of chunks of information used for execution of the plurality of test cases are validated and the SSHO is updated. Updating the SSHO includes replacing one or more entries in the SSHO that are identified to be related to one or more testcases that failed the validation, with one or more new entries.

The SSHO based test case generation allows the system 100 to determine/identify chunks of information that are most relevant to the API for which the test cases are being generated, and using the determined/identified chunks of information then for generating the test cases ensures that the test cases generated are more relevant to the concerned API. This in turn improves efficiency/accuracy of testing of the API. As previously stated, the state of the art approaches involve generation of testcases by processing information with no clarity of relationships and context information. Hence they would require comparatively more data to make inferences, leading to issues such as but not limited to hallucination. Comparatively, in the approach disclosed herein, the SSHO provides the system information on the relationships and historical context, to generate the testcases, allowing the system to make necessary inferences without requiring large amount of data, addressing the stated challenges of the state of the art approaches.

It is to be understood by a person having ordinary skill in the art or person skilled in the art that the referred AI model(s), i.e., the first third GenAI model, the second GenAI model, and the third GenAI model in this case, are exemplary and shall not be construed as limiting the scope of the present disclosure and may be trained by any training dataset that meets the mentioned defining characteristics.

The written description describes the subject matter herein to enable any person skilled in the art to make and use the embodiments. The scope of the subject matter embodiments is defined by the claims and may include other modifications that occur to those skilled in the art. Such other modifications are intended to be within the scope of the claims if they have similar elements that do not differ from the literal language of the claims or if they include equivalent elements with insubstantial differences from the literal language of the claims.

The embodiments of present disclosure herein address unresolved problem of test case generation for applications, GenAI models and data from structured and unstructured documents. The embodiment, thus provides a Structure-Semantics History Ontologies (SSHO) based test case generation. Moreover, the embodiments herein further provide a Cascading Influence Matrix (CIM) based approach for generating the SSHO.

It is to be understood that the scope of the protection is extended to such a program and in addition to a computer-readable means having a message therein; such computer-readable storage means contain program-code means for implementation of one or more steps of the method, when the program runs on a server or mobile device or any suitable programmable device. The hardware device can be any kind of device which can be programmed including e.g., any kind of computer like a server or a personal computer, or the like, or any combination thereof. The device may also include means which could be e.g., hardware means like e.g., an application-specific integrated circuit (ASIC), a field-programmable gate array (FPGA), or a combination of hardware and software means, e.g., an ASIC and an FPGA, or at least one microprocessor and at least one memory with software processing components located therein. Thus, the means can include both hardware means and software means. The method embodiments described herein could be implemented in hardware and software. The device may also include software means. Alternatively, the embodiments may be implemented on different hardware devices, e.g., using a plurality of CPUs.

The embodiments herein can comprise hardware and software elements. The embodiments that are implemented in software include but are not limited to, firmware, resident software, microcode, etc. The functions performed by various components described herein may be implemented in other components or combinations of other components. For the purposes of this description, a computer-usable or computer readable medium can be any apparatus that can comprise, store, communicate, propagate, or transport the program for use by or in connection with the instruction execution system, apparatus, or device.

The illustrated steps are set out to explain the exemplary embodiments shown, and it should be anticipated that ongoing technological development will change the manner in which particular functions are performed. These examples are presented herein for purposes of illustration, and not limitation. Further, the boundaries of the functional building blocks have been arbitrarily defined herein for the convenience of the description. Alternative boundaries can be defined so long as the specified functions and relationships thereof are appropriately performed. Alternatives (including equivalents, extensions, variations, deviations, etc., of those described herein) will be apparent to persons skilled in the relevant art(s) based on the teachings contained herein. Such alternatives fall within the scope of the disclosed embodiments. Also, the words "comprising," "having," "containing," and "including," and other similar forms are intended to be equivalent in meaning and be open ended in that an item or items following any one of these words is not meant to be an exhaustive listing of such item or items, or meant to be limited to only the listed item or items. It must also be noted that as used herein and in the appended claims, the singular forms "a," "an," and "the" include plural references unless the context clearly dictates otherwise.

Furthermore, one or more computer-readable storage media may be utilized in implementing embodiments consistent with the present disclosure. A computer-readable storage medium refers to any type of physical memory on which information or data readable by a processor may be stored. Thus, a computer-readable storage medium may store instructions for execution by one or more processors, including instructions for causing the processor(s) to perform steps or stages consistent with the embodiments described herein. The term "computer-readable medium" should be understood to include tangible items and exclude carrier waves and transient signals, i.e., be non-transitory. Examples include random access memory (RAM), read-only memory (ROM), volatile memory, nonvolatile memory, hard drives, CD ROMs, DVDs, flash drives, disks, and any other known physical storage media.

It is intended that the disclosure and examples be considered as exemplary only, with a true scope of disclosed embodiments being indicated by the following claims.

## Claims

1. A processor implemented method (200), comprising:
receiving (202), via one or more hardware processors, an Application Programming Interface (API) for testing, a Structure-Semantics History Ontologies (SSHO)_Rel data associated with the API, and a Context Summary (CS);
querying (204), via the one or more hardware processors, a vector DataBase (vector DB) to retrieve a plurality of chunks of information related to the API,
wherein the plurality of chunks of information comprise data from one or more of a plurality of structured documents and unstructured documents;
determining (206), via the one or more hardware processors, validity of each of the plurality of chunks of information retrieved from the vector DB, with reference to the API, comprising:
performing (302) a first level of validation comprising validating a relevancy of the retrieved plurality of chunks of information by a first Generative Artificial Intelligence (GenAI) model using a document name and section attached to each of the plurality of chunks, and a relationship data extracted from the SSHO_Rel data and the CS, wherein a first relevance score representing extent of relevance of the retrieved plurality of chunks is generated while performing the first level of validation;
performing (304) a second level of validation comprising validating the relevancy of the retrieved plurality of chunks of information using a second GenAI model, using the document name and section attached to each of the plurality of chunks of information and the relationship data extracted from the SSHO_Rel data and the CS, wherein a second relevance score representing extent of relevance of the retrieved plurality of chunks is generated while performing the second level of validation;
performing (306) a third level of validation, comprising validating the relevancy of the retrieved plurality of chunks of information based on the SSHO_Rel data and the CS, wherein a third relevance score representing extent of relevance of the retrieved plurality of chunks is generated while performing the third level of validation; and
generating (308) a combined probability score, based on the first relevance score, the second relevance score, and the third second relevance score, wherein the combined probability score represents an average extent of relevancy of each of the plurality of chunks of information for the API; and
generating (208), via the one or more hardware processors, a plurality of test cases comprising a plurality of positive testcases and negative testcases by processing a) one or more of the plurality of chunks having the combined probability score exceeding a threshold, and b) one or more business rules, wherein while generating the plurality of test cases, a plurality of fields of each of the plurality of test cases are filled using data from the one or more of the plurality of chunks having the probability score exceeding the threshold.

2. The processor implemented method as claimed in claim 1, wherein the plurality of test cases are validated by an evaluation, and wherein if number of testcases failed is exceeding a threshold, a plurality of chunks of information used for execution of the plurality of test cases are validated and the SSHO is updated.

3. The processor implemented method as claimed in claim 2, wherein updating the SSHO comprises replacing one or more entries in the SSHO that are identified to be related to one or more testcases that failed the validation, with one or more new entries.

4. The processor implemented method as claimed in claim 2, wherein the CS is generated using a plurality of structured and unstructured documents, one or more test case formats, and contents of the SSHO.

5. The processor implemented method as claimed in claim 1, wherein the SSHO is created using a Cascading Influence Matrix (CIM) based approach, comprising:
capturing relationship between a plurality of historical testcases, associated results, associated documents, and associated sections in the documents, in the CIM (402); and
extracting a summary of the CIM by processing the CIM using a third GenAI model, wherein the extracted summary represents the SSHO (404).

6. The processor implemented method as claimed in claim 1, wherein the SSHO_Rel data associated with the API represents historical context with respect to association of a plurality of test cases with name and section of corresponding documents from among a plurality of documents.

7. A system (100), comprising:
one or more hardware processors (102);
a communication interface (112); and
a memory (104) storing a plurality of instructions, wherein the plurality of instructions cause the one or more hardware processors to:
receive an Application Programming Interface (API) for testing, a Structure-Semantics History Ontologies (SSHO)_Rel data associated with the API, and a Context Summary (CS);
query a vector DataBase (vector DB) to retrieve a plurality of chunks of information related to the API, wherein the plurality of chunks of information comprise data from one or more of a plurality of structured documents and unstructured documents;
determine validity of each of the plurality of chunks of information retrieved from the vector DB, with reference to the API, by:
performing a first level of validation comprising validating a relevancy of the retrieved plurality of chunks of information by a first Generative Artificial Intelligence (GenAI) model using a document name and section attached to each of the plurality of chunks, and a relationship data extracted from the SSHO_Rel data and the CS, wherein a first relevance score representing extent of relevance of the retrieved plurality of chunks is generated while performing the first level of validation;
performing a second level of validation comprising validating the relevancy of the retrieved plurality of chunks of information using a second GenAI, using the document name and section attached to each of the plurality of chunks of information and the relationship data extracted from the SSHO_Rel data and the CS, wherein a second relevance score representing extent of relevance of the retrieved plurality of chunks is generated while performing the second level of validation;
performing a third level of validation, comprising validating the relevancy of the retrieved plurality of chunks of information based on the SSHO_Rel data and the CS, wherein a third relevance score representing extent of relevance of the retrieved plurality of chunks is generated while performing the third level of validation; and
generating a combined probability score, based on the first relevance score, the second relevance score, and the third second relevance score, wherein the combined probability score represents an average extent of relevancy of each of the plurality of chunks of information for the API; and
generate a plurality of test cases comprising a plurality of positive testcases and negative testcases by processing a) one or more of the plurality of chunks having the combined probability score exceeding a threshold, and b) one or more business rules, wherein while generating the plurality of test cases, a plurality of fields of each of the plurality of test cases are filled using data from the one or more of the plurality of chunks having the probability score exceeding the threshold.

8. The system as claimed in claim 7, wherein the one or more hardware processors are configured to validate the plurality of test cases by an evaluation, and wherein if number of testcases failed is exceeding a threshold, a plurality of chunks of information used for execution of the plurality of test cases are validated and the SSHO is updated.

9. The system as claimed in claim 8, wherein the one or more hardware processors are configured to update the SSHO by replacing one or more entries in the SSHO that are identified to be related to one or more testcases that failed the validation, with one or more new entries.

10. The system as claimed in claim 8, wherein the one or more hardware processors are configured to generate the CS using a plurality of structured and unstructured documents, one or more test case formats, and contents of the SSHO.

11. The system as claimed in claim 7, wherein the one or more hardware processors are configured to create the SSHO using a Cascading Influence Matrix (CIM) based approach, by:
capturing relationship between a plurality of historical testcases, associated results, associated documents, and associated sections in the documents, in the CIM; and
extracting a summary of the CIM by processing the CIM using a third GenAI model, wherein the extracted summary represents the SSHO.

12. The system as claimed in claim 7, wherein the SSHO_Rel data associated with the API represents historical context with respect to association of a plurality of test cases with name and section of corresponding documents from among a plurality of documents.

13. One or more non-transitory machine-readable information storage mediums comprising one or more instructions which when executed by one or more hardware processors cause:
receiving an Application Programming Interface (API) for testing, a Structure-Semantics History Ontologies (SSHO)_Rel data associated with the API, and a Context Summary (CS);
querying a vector DataBase (vector DB) to retrieve a plurality of chunks of information related to the API, wherein the plurality of chunks of information comprise data from one or more of a plurality of structured documents and unstructured documents;
determining validity of each of the plurality of chunks of information retrieved from the vector DB, with reference to the API, comprising:
performing a first level of validation comprising validating a relevancy of the retrieved plurality of chunks of information by a first Generative Artificial Intelligence (GenAI) model using a document name and section attached to each of the plurality of chunks, and a relationship data extracted from the SSHO_Rel data and the CS, wherein a first relevance score representing extent of relevance of the retrieved plurality of chunks is generated while performing the first level of validation;
performing a second level of validation comprising validating the relevancy of the retrieved plurality of chunks of information using a second GenAI model, using the document name and section attached to each of the plurality of chunks of information and the relationship data extracted from the SSHO_Rel data and the CS, wherein a second relevance score representing extent of relevance of the retrieved plurality of chunks is generated while performing the second level of validation;
performing a third level of validation, comprising validating the relevancy of the retrieved plurality of chunks of information based on the SSHO_Rel data and the CS, wherein a third relevance score representing extent of relevance of the retrieved plurality of chunks is generated while performing the third level of validation; and
generating a combined probability score, based on the first relevance score, the second relevance score, and the third second relevance score, wherein the combined probability score represents an average extent of relevancy of each of the plurality of chunks of information for the API; and
generating a plurality of test cases comprising a plurality of positive testcases and negative testcases by processing a) one or more of the plurality of chunks having the combined probability score exceeding a threshold, and b) one or more business rules, wherein while generating the plurality of test cases, a plurality of fields of each of the plurality of test cases are filled using data from the one or more of the plurality of chunks having the probability score exceeding the threshold.

14. The one or more non-transitory machine readable information storage mediums as claimed in claim 13, wherein the plurality of test cases are validated by an evaluation, and wherein if number of testcases failed is exceeding a threshold, a plurality of chunks of information used for execution of the plurality of test cases are validated and the SSHO is updated.

15. The one or more non-transitory machine readable information storage mediums as claimed in claim 14, wherein updating the SSHO comprises replacing one or more entries in the SSHO that are identified to be related to one or more testcases that failed the validation, with one or more new entries.
